# EUROPÄISCHE PATENTSCHRIFT

(11) **EP 0 861 768 B1**
(45) Veröffentlichungstag und Bekanntmachung des Hinweises auf die Patenterteilung: **29.05.2002**
(21) Anmeldenummer: 98102849.1
(22) Anmeldetag: 19.02.1998
(51) Int. Cl.: B62D 53/08

(54) **Höhenverstellbare Sattelkupplung**
Fifth wheel coupling with adjustable height
Couplage de cinquième roue à hauteur règlable

(30) Priorität: 01.03.1997 DE 19708361
(43) Veröffentlichungstag der Anmeldung: 02.09.1998
(73) Patentinhaber: Holland Europe GmbH, 33758 Schloss Holte-Stukenbrock (DE)
(72) Erfinder: Farke, Fritz, 33175 Bad Lippspringe (DE)
(74) Vertreter: TER MEER STEINMEISTER & PARTNER GbR

(56) Entgegenhaltungen:
- WO-A-85/00331
- US-A- 3 649 047
- PATENT ABSTRACTS OF JAPAN vol. 3, no. 35 (M-053), 24.März 1979 -& JP 54 009826 A (KYOKUTO KAIHATSU KOGYO), 25.Januar 1979,

## Beschreibung

Die Erfindung betrifft eine höhenverstellbare Sattelkupplung für Sattelauflieger-Zugfahrzeuge entsprechend dem Oberbegriff von Anspruch 1.

Derartige Sattelkupplungen sind in verschiedenen Ausführungsformen bekannt. Die Höhenverstellung wird benötigt, da auf dem Markt Sattelauflieger mit unterschiedlichen Auflieger-Höhen, insbesondere einer früher üblichen, höheren Ausführung und einer neueren, tieferen Ausführung angeboten werden. Die Höhenverstellung von herkömmlichen Sattelkupplungen erfolgt zumeist mit Hilfe eines Untergestells, das ein Hebelgestänge umfaßt, dessen Hebel einerseits am Fahrgestell und andererseits an der Sattelplatte gelagert sind. Da die oberen Enden dieser Hebel Radien beschreiben, entsteht beim Heben und Senken ein seitlicher Versatz der Aufliegerplatte. Das ist unerwünscht, da sich die Gesamtlänge der Sattelzugkombination verändert und somit auch die Lastverteilung auf die LKW-Achsen beeinflußt wird. Andere bekannte Ausführungsformen bewirken zwar eine rein vertikale Verstellung, besitzen aber einen aufwendigen und entsprechend kostspieligen Hydraulikantrieb, der zudem pflegebedürftig ist.

Die US-Patentschrift 3 649 047 zeigt und beschreibt eine Sattelkupplung der oben angegebenen Art, mit der die zuvor dargestellten Schwierigkeiten zumindest teilweise behoben werden. Durch Verwendung einer Hebelkonstruktion der angegebenen Art wird erreicht, daß die Sattelplatte bei der Höhenverstellung eine zumindest weitgehend senkrechte Bewegung ausführt. Allerdings weist auch diese bekannte Konstruktion einen Hydraulikzylinder für die Höhenverstellung auf. Dieser Hydraulikzylinder dürfte notwendig sein, da die Höhenverstellung nach der amerikanischen Patentschrift vorgesehen ist zum möglichst raschen An- und Abkuppeln eines Aufliegers und dabei naturgemäß auch zum Abheben des Aufliegers von den Stützrädern des Aufliegers und zum Absenken auf diese, so daß starke Antriebskräfte erforderlich sind. Üblicherweise werden beim An- und Abkuppeln die Stützräder des Aufliegers angehoben und abgesenkt. Dies wird in der Druckschrift jedoch insbesondere für den Fall kurzer Rangierfahrten als zu zeitaufwendig angesehen. Die höhenverstellbare Kupplung soll daher ein rasches An- und Abkuppeln ermöglichen, ohne daß die Stützräder verändert werden müssen. Dies führt dazu, daß die bekannte Sattelkupplung einen relativ großen Verstellweg erfordert und zur Betätigung einen sehr kräftigen Antrieb in der Form eines Hydraulikzylinders benötigt. Es handelt sich also auch hier um eine relativ aufwendige Lösung mit einem pflegebedürftigen Hydrauliksystem.

Eine ähnliche höhenverstellbare Aufliegerkupplung zeigt das gattungsgemäße japanische Dokument JP-A-54 009 826. Auch diese Lösung weist einen Hydraulikzylinder auf und ist offenbar für das laufende Umschalten der Höhe im Betrieb vorgesehen.

Die WO 85/00331 zeigt und beschreibt eine Sattelkupplung, die zur Berücksichtigung unterschiedlicher Aufliegerfahrzeug-Höhen verstellbar sein soll. Die Sattelplatte ist zu diesem Zweck an Schwenkarmen gelagert, die ihrerseits durch Stützen abgestützt sind, die in verschiedenen Löchern von Lochreihen festgelegt werden können.

Der Erfindung liegt daher die Aufgabe zugrunde, eine höhenverstellbare Sattelkupplung der obigen Art zu schaffen, die bei einfachem Aufbau eine vertikale Verstellung ohne seitlichen Versatz ermöglicht.

Diese Aufgabe wird erfindungsgemäß bei der obigen Sattelkupplung mit den Merkmalen des Anspruchs 1 gelöst.

Bei dieser Hebelkonstellation ragen die beiden Hebel schräg aufwärts, so daß die ersten Enden der Hebel auch als untere Enden und die zweiten Enden als obere Enden bezeichnet werden sollen. Als Enden der Hebel werden in diesem Zusammenhang die endseitigen Achsen verstanden. Wenn der erste Hebel im Mittelbereich des zweiten Hebels gelagert ist und der zweite Hebel im wesentlichen doppelt so lang wie der erste ist, beschreibt der zweite Hebel an seinem freien, oberen Ende im wesentlichen eine gerade, vertikale Bahn. Wählt man die Geometrie der Hebel so, daß die Länge des zweiten Hebels, genauer gesagt der Abstand zwischen den beiden Achsen des zweiten Hebels, genau doppelt so groß ist wie der Abstand zwischen den beiden Achsen des ersten Hebels und der erste Hebel genau in der Mitte zwischen den Achsen des zweiten Hebels gelagert ist, so ist die durch das erste Ende, wiederum verstanden als der geometrische Mittelpunkt der ersten Achse des zweiten Hebels, beschriebene Bahn exakt senkrecht. Die Aufliegerplatte kann also genau und ohne seitlichen Versatz in der Höhe verstellt werden.

Erfindungsgemäß sind zwei parallel nebeneinander und im Abstand zueinander angeordnete Hebelanordnungen vorgesehen, und die unteren Enden der zweiten Hebel sind durch eine gemeinsame, in verschiedenen Längspositionen der Führung arretierbare Achse verbunden.

Durch diese Anordnung wird die Aufliegerplatte gegen seitliche Kippbewegungen gesichert.

Die ersten Hebel werden jeweils als Hebelpaar ausgebildet, das zwei beidseitig gegen die zweiten Hebel anliegende Hebel umfaßt. Dadurch werden ungünstige asymmetrische Biegebelastungen in der Hebelanordnung vermieden.

Die ersten Hebel sind zwischen zwei seitlichen auf einer auf dem Fahrgestell angebrachten Grundplatte angeordneten Wangen gelagert.

Im folgenden werden bevorzugte Ausführungsbeispiele der Erfindung anhand der beigefügten Zeichnung nähert erläutert.
- Fig. 1: ist eine schematische Seitenteilansicht eines höhenverstellbaren Untergestells einer im übrigen nicht gezeigten Sattelkupplung;
- Fig. 2: ist eine Draufsicht zu Fig. 1;
- Fig. 3: ist eine teilweise geschnittene Draufsicht von rechts in Fig. 1 und 2.

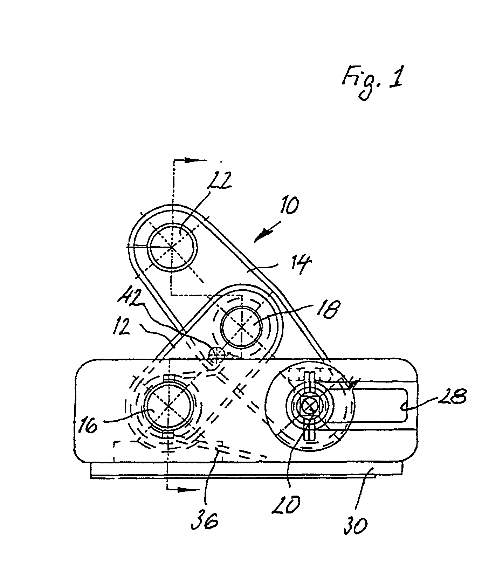

Das Untergestell der Aufliegerplatte umfaßt bei der dargestellten Ausführungsform gemäß Fig. 1 eine Hebelanordnung 10 aus zwei verbundenen Hebeln. :Die Hebelanordnung 10 umfaßt einen kürzeren Hebel 12 und einen längeren Hebel 14, die zur Unterscheidung auch als erster und zweiter Hebel bezeichnet werden. Beide Hebel 12,14 besitzen an ihren Enden nicht bezeichnete Bohrungen zur Aufnahme von Achsen 16,18 bzw. 20,22.

Der Abstand zwischen den Achsen 20,22 des zweiten Hebels 14 ist doppelt so lang wie der Abstand zwischen den Achsen 16,18 des ersten Hebels 12. Im übrigen befindet sich die obere Achse 18 des ersten Hebels 12 im Mittelpunkt des zweiten Hebels 14 zwischen den beiden Achsen 20,22 des zweiten Hebels.

Während die untere, erste Achse 16 des kürzeren Hebels 12 fest in seitlichen Wangen 24,26 gelagert ist, ist die untere Achse 20 des längeren, zweiten Hebels 14 in einem waagerechten Langloch 28 verschiebbar.

Bei der dargestellten Geometrie bewegt sich die obere Achse 22 des zweiten Hebels 14 in einer vertikalen Linie, wenn die untere Achse 20 dieses Hebels entlang einer waagerechten Linie verschoben wird. Wird die obere Achse 22 als Anlenkpunkt für eine nicht gezeigte Aufliegerplatte verwendet, so läßt sich diese exakt vertikal verstellen, ohne daß es zu einem seitlichen Versatz kommt.

Die untere Achse 20 des zweiten Hebels 14, die nicht nur eine Schwenkung des zweiten Hebels, sondern zugleich eine Verschiebung in dem Langloch 28 zuläßt, kann in beliebigen Positionen des Langlochs 28 verriegelt werden.

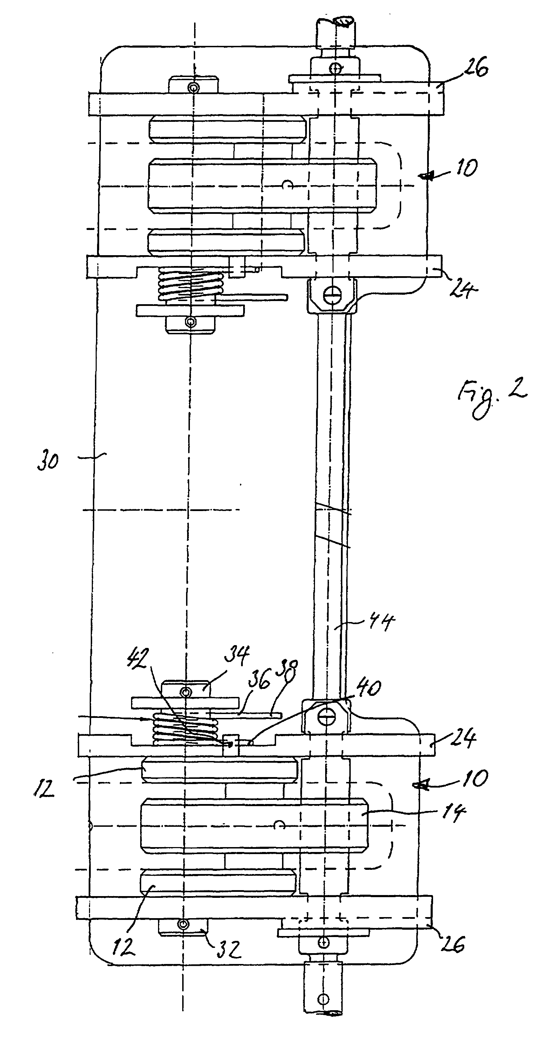

In der in Fig. 2 gezeigten Draufsicht sind zwei parallel zueinander angeordnete Hebelanordnungen 10 gemäß Fig. 1 vorgesehen. Jede der Hebelanordnungen besteht aus einem zweiten Hebel 14 und zwei auf beiden Seiten dieses zweiten Hebels angeordneten ersten Hebeln 12, die über die Achse 18 mit dem Mittelbereich des zweiten Hebels verbunden sind. Die beiden ersten Hebel 12 und der zweite Hebel 14 liegen insgesamt zwischen zwei seitlichen Wangen 24,26, auf die bereits im Zusammenhang mit Fig. 1 hingewiesen wurde. Diese seitlichen Wangen sind senkrecht aufragende Platten, die auf einer Grundplatte 30 befestigt, insbesondere verschweißt sind, die auf dem Fahrgestell eines Zugfahrzeugs befestigt werden.

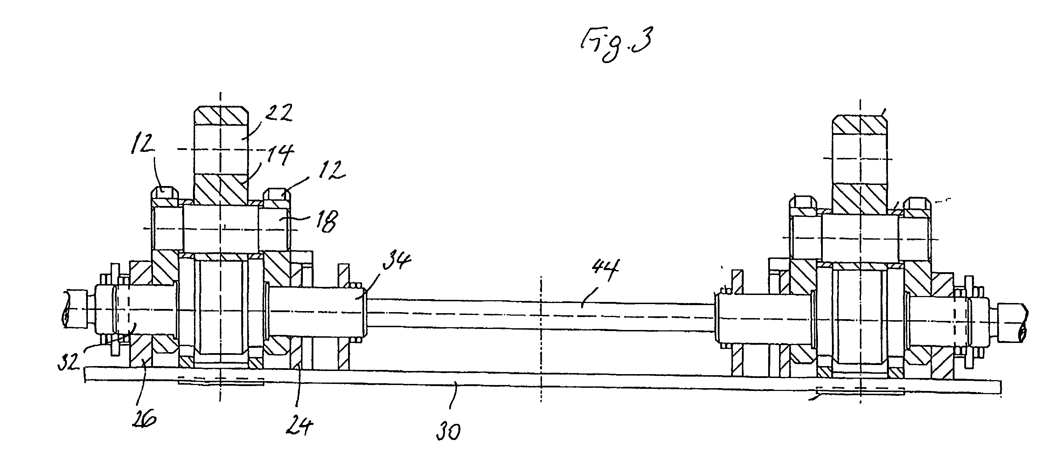

Nach Fig. 2 und 3 sind die beiden zur Abstützung der nicht gezeigten Aufliegerplatte vorgesehenen Hebelanordnungen identisch, jedoch spiegelbildlich aufgebaut. Es soll daher für weitere Einzelheiten nur auf eine der beiden Hebelanordnungen Bezug genommen werden, die sich in Fig. 2 im unteren Bereich und in Fig. 3 auf der linken Seite befindet.

In Fig. 2 ist erkennbar, daß die beiden ersten Hebel 12 einer Hebelanordnung auf den gegenüberliegenden Seiten des zweiten Hebels 14 jeweils mit einem nach außen gerichteten Achsstumpf 32,34 in den seitlichen Wangen 24,26 schwenkbar gelagert sind. Die Achsstümpfe 32,34 bilden also gemeinsam die in Fig. 1 gezeigte und mit 16 bezeichnete untere Achse des bzw. der ersten Hebel 12. Auf dem in Fig. 2 oben liegenden Achsstumpf 34 befindet sich eine Schenkelfeder 36, die den Achsstumpf 34 mit mehreren Windungen umgibt. Ein Schenkel 38 der Schenkelfeder stützt sich auf der Grundplatte 30 ab, während der andere Schenkel 40 nach oben gegen einen Zapfen 42 drückt, der sich an dem ersten Hebel 12 befindet. Auf diese Weise ist die Schenkelfeder bestrebt, die ersten Hebel 12 anzuheben und damit die Aufliegerplatten nach oben vorzuspannen. Die Schenkelfeder stellt nur eine mögliche Ausführungsform dar. Sie kann ersetzt werden durch Luftzylinder, mechanische Hebevorrichtungen etc.

Wie Fig. 2 zeigt, sind die unteren Achsen 20 der zweiten Hebel 14 der beiden Hebelanordnungen 10 durch eine Verbindungsachse 44 miteinander verbunden. Die Verbindungsachse 44 dient dazu, die Achsen 20 gemeinsam drehen zu können. Dadurch können die beiden Achsen 20 in nicht näher dargestellter Weise in unterschiedlichen Längspositionen des Langloches 28 verriegelt werden. Diese Längspositionen entsprechen unterschiedlichen Höhen der nicht dargestellten Aufliegerplatte.

## Patentansprüche

1. Höhenverstellbare Sattelkupplung für Sattelauflieger-Zugfahrzeuge mit einer Aufliegerplatte und einem höhenverstellbaren Untergestell, das die Aufliegerplatte auf dem Fahrgestell des Zugfahrzeugs abstützt und das wenigstens eine Hebelanordnung (10) aus jeweils zwei schwenkbar miteinander verbundenen Hebeln (12,14) umfaßt, deren erster Hebel (12) in einer ersten unteren Achse (16) schwenkbar mit dem Fahrgestell und in einer zweiten oberen Achse (18) schwenkbar mit dem zweiten Hebel (14) verbunden ist und deren zweiter Hebel (14) in einer ersten unteren Achse (20) schwenkbar und waagerecht verschiebbar mit dem Fahrgestell und in einer zweiten oberen Achse (22) schwenkbar mit der Aufliegerplatte verbunden ist, und wobei der Abstand zwischen der ersten und zweiten Achse (20,22) des zweiten Hebels im wesentlichen doppelt so lang wie der Abstand zwischen der ersten und zweiten Achse (16,18) des ersten Hebels (12) ist und wobei die zweite Achse (18) des ersten Hebels im Mittelbereich zwischen der ersten und zweiten Achse (20,22) des zweiten Hebels (14) gelagert ist **dadurch gekennzeichnet**
- **daß** zwei parallel nebeneinander und im Abstand zueinander angeordnete Hebelanordnungen (10) vorgesehen sind,
- **daß** bei jeder Hebelanordnung (10) die ersten Hebel (12) als Hebelpaar mit zwei beidseitig gegen den zweiten Hebel (14) anliegenden Hebeln ausgebildet sind,
- **daß** die unteren Achsen (20) der zweiten Hebel (14) der beiden Hebelanordnungen (10) für eine gemeinsame Drehung durch eine Verbindungswelle (44) verbunden sind,
- **daß** die unteren Achsen (20) der zweiten Hebel in unterschiedlichen Positionen von waagerechten Langlöchern (28) verriegelbar sind.

2. Sattelkupplung nach Anspruch 1, **dadurch gekennzeichnet, daß** die Schwenkrichtung der ersten und zweiten Hebel (12,14) parallel zur Fahrtrichtung des Fahrzeugs verläuft.

3. Sattelkupplung nach einem der vorhergehenden Ansprüche, **dadurch gekennzeichnet, daß** die ersten Hebel (12) mit ihren ersten Achsen (16) zwischen zwei die Hebel lagernden Wangen (24,26) angeordnet sind, die sich auf einer mit dem Fahrgestell verbundenen Grundplatte (30) befinden.

4. Sattelkupplung nach Anspruch 3, **dadurch gekennzeichnet, daß** die Führungen der ersten Achsen (20) der zweiten Hebel (14) in den Wangen (24,16) ausgebildet sind und Langlöcher in den Wangen umfassen.

## Claims

1. Vertically-adjustable fifth wheel for semitrailer traction vehicles having a semitrailer plate and a vertically-adjustable underframe which supports the semitrailer plate on the chassis of the traction vehicle and which includes at least one lever arrangement (10) comprising two levers (12, 14) which are connected to one another pivotably and of which the first lever (12) is connected pivotably, at a first, lower, shaft (16), to the chassis and, at a second, upper, shaft (18), to the second lever (14), and of which the second lever (14) is connected, at a first, lower, shaft (20), pivotably and in a horizontally displaceable manner to the chassis and, at a second, upper, shaft (22), pivotably to the semitrailer plate, and the distance between the first and second shafts (20, 22) of the second lever being substantially twice as long as the distance between the first and second shafts (16, 18) of the first lever (12), and the second shaft (18) of the first lever being supported in the central region between the first and second shafts (20, 22) of the second lever (14), **characterised in that**
- two lever arrangements (10) which are arranged parallel next to one another and at a distance from one another are provided,
- in each lever arrangement (10), the first levers (12) are constructed as a lever pair having two levers abutting both sides of the second lever (14),
- the lower shafts (20) of the second levers (14) of the two lever arrangements (10) are connected for common rotation by a connecting shaft (44),
- the lower shafts (20) of the second levers can be locked in different positions within horizontal slots (28).

2. Fifth wheel according to claim 1, **characterised in that** the pivoting direction of the first and second levers (12, 14) extends parallel with the direction of travel of the vehicle.

3. Fifth wheel according to either of the preceding claims, **characterised in that** the first levers (12) are arranged with their first shafts (16) between two side members (24, 26) which support the levers and which are located on a base plate (30) connected to the chassis.

4. Fifth wheel according to claim 3, **characterised in that** the guides of the first shafts (20) of the second levers (14) are constructed in the side members (24, 26) and comprise slots in the side members.

## Revendications

1. Sellette réglable en hauteur pour véhicules tracteurs à semi-remorque avec un plateau de semi-remorque et un train réglable en hauteur qui soutient le plateau de semi-remorque sur le châssis du véhicule tracteur, et qui comprend au moins un dispositif à leviers (10) constitué chacun de deux leviers (12, 14) reliés entre eux de manière à pouvoir pivoter, dont le premier levier (12), dans un premier axe inférieur (16), est relié au châssis de manière à pouvoir pivoter et, dans un deuxième axe supérieur (18), est relié au deuxième levier (14) de manière à pouvoir pivoter, et dont le deuxième levier (14), dans un premier axe inférieur (20), est relié au châssis de manière à pouvoir pivoter et à coulisser horizontalement et, dans un deuxième axe supérieur (22), est relié pivotant au plateau de semi-remorque, la distance entre le premier et le deuxième axe (20, 22) du deuxième levier étant sensiblement deux fois plus grande que la distance entre le premier et le deuxième axe (16, 18) du premier levier (12), et le deuxième axe (18) du premier levier étant monté dans la zone centrale entre le premier et le deuxième axe (20, 22) et le deuxième levier (14), **caractérisée en ce que**
- deux dispositifs à leviers disposés côte à côte parallèlement et à distance l'un de l'autre sont prévus,
dans chaque dispositif à leviers (10), les premiers leviers (12) sont réalisés en tant que paire de leviers avec deux leviers s'appliquant des deux côtés contre le deuxième levier (14),
- les axes inférieurs (20) des deuxièmes leviers (14) des deux dispositifs à leviers (10) sont reliés par un arbre de liaison (44), pour une rotation commune,
- les axes inférieurs (20) des deuxièmes leviers peuvent être verrouillés dans différentes positions de trous oblongs (28) horizontaux.

2. Sellette selon la revendication 1, **caractérisé en ce que** le sens de pivotement des premiers et deuxièmes leviers (12, 14) est parallèle au sens de marche du véhicule.

3. Sellette selon l'une des revendications précédentes, **caractérisé en ce que** les premiers leviers (12) avec leurs premiers axes (16) sont disposés entre deux joues (24, 26) qui supportent les leviers et qui se trouvent sur une plaque de base (30) reliée au châssis.

4. Sellette selon la revendication 3, **caractérisé en ce que** les guides des premiers axes (20) des deuxièmes leviers (14) sont formés dans les joues (24, 16) et comprennent des trous oblongs dans les joues.
